# EUROPEAN PATENT APPLICATION

(11) **EP 4 474 681 A1**
(43) Date of publication of application: **11.12.2024**
(21) Application number: 23889836.5
(22) Date of filing: 18.10.2023
(51) Int. Cl.: F16H 63/34

(54) **PARKING DEVICE**

(30) Priority: 21.04.2023 CN 202320918033 U
(71) Applicant: Jing-Jin Electric Technologies Co., Ltd, Beijing 100023 (CN)
(72) Inventor: ZHANG, Yinzhe, Beijing 100023 (CN); LI, Jianwen, Beijing 100023 (CN); FAN, Ming, Beijing 100023 (CN); CHEN, Zhengguang, Beijing 100023 (CN)
(74) Representative: Savi, Massimiliano
(86) International application number: PCT/CN2023/125207
(87) International publication number: WO 2024/216883

(57) **Abstract**

A parking device comprises a parking mechanism (1) and a manual unlocking mechanism (2). The parking mechanism (1) is connected to a shaft of a reducer so as to control the shaft of the reducer to be in a parking state or unlock the parking state. The parking mechanism (1) is immersed in lubricating oil inside a housing (42) of the reducer. One end of the manual unlocking mechanism (2) is located inside a cab, and the other end of the manual unlocking mechanism (2) is connected to the parking mechanism (1) so as to drive the parking mechanism (1) to control the shaft of the reducer to switch to unlocking the parking state. By providing the parking mechanism (1) and the manual unlocking mechanism (2), it is possible to limit the rotation of the shaft of the reducer through the parking mechanism (1), specifically, make the rotation of the shaft of the reducer stop or resume, and thus achieve the parking and unlocking of commercial vehicles, and it is also possible to control the manual unlocking mechanism (2) inside the cab to unlock the parking mechanism (1) when the parking mechanism (1) is in the parking state and cannot operate itself, thereby ensuring timely unlocking of the parking mechanism (1) and thus improving the safety and convenience of the parking device.

## Description

### CROSS REFERENCING OF RELATED APPLICATIONS

This application claims priority from the Chinese utility model patent application No. 202320918033.9 filed with the Chinese Patent Office on April 21, 2023 and entitled "PARKING DEVICE", the content of which is hereby incorporated by reference in its entirety.

### TECHNICAL FIELD

The present utility model belongs to the technical field of parking, and specifically relates to a parking device that can be used for commercial vehicles.

### BACKGROUND

Commercial vehicles include all freight vehicles and passenger cars with 9 or more seats, and can be divided into five categories: passenger cars, freight cars, semi-trailer tractors, incomplete passenger cars, and incomplete freight cars. Commercial vehicles need to be parked by the driver using a foot or hand brake when encountering congested road conditions or in an uphill or downhill state during driving.

Commercial vehicles have characteristics of long mileage and long driving time each time, so frequent use of a foot or hand brake not only increases driver fatigue, but also poses a safety hazard of slipping. Moreover, it can also lead to brake disc overheating and failure. Therefore, the existing commercial vehicles have begun to use electronic parking devices to replace a foot or hand brake to achieve parking.

An existing parking mechanism comprises a parking motor, a transmission shaft, a toggle guide plate, a pawl, a ratchet, and an intermediate transmission shaft within a gearbox body. By driving the parking motor to drive the transmission shaft and further drive the toggle guide plate to rotate forward and backward, it is possible to achieve locking and releasing between the pawl and the ratchet. Controlling the middle transmission shaft of the gearbox to start and stop can replace the parking by a foot or hand brake, thereby avoiding the problem of vehicle slipping during long-term parking, and thus achieving the goal of long-term parking without movement.

However, it is found during the use of the parking mechanism that it has the following problems:
(1) The meshing position between the ratchet and pawl, the toggle guide plate, and the transmission shaft are all located at the upper part of the gearbox body. Since most gearboxes use splashing lubricating oil, and the gear rotation speed in the gearbox in the parking state is relatively low, the lubrication needs of the parking mechanism cannot be met. This will increase the wear of the meshing position between the ratchet and pawl as well as the toggle guide and transmission shaft during the transmission process, thereby reducing the durability of the parking mechanism and leading to failure.
(2) During driving, if the parking motor loses power supply, since the parking mechanism is located at the bottom of the vehicle, the driver needs to operate under the vehicle to unlock the pawl and ratchet, which reduces the safety of parking unlocking and increases the difficulty of parking unlocking.
(3) The shape and size of the tooth groove of the ratchet is similar to those of the pawl. In order to enable the pawl to successfully park into the ratchet, the ratchet must be provided on the intermediate shaft with a lower speed. The torque and inertia on the shaft with a lower speed are also large, which increases the impact on the parking mechanism during the parking process and reduces its durability;

Moreover, as the speed of the intermediate shaft of different transmissions varies, when the parking mechanism is provided in the reducer of commercial electric vehicles, due to the single-gear high-speed-ratio of the reducer, the pawl may not have the opportunity to enter the tooth groove of the pawl, thereby leading to parking failure and affecting the safety of the commercial vehicles.

(4) When the parking mechanism is installed on the powertrain of commercial electric vehicles, due to the large torque output of the motor of commercial electric vehicles, a larger parking mechanism needs to be designed in order to overcome this torque and complete the parking action, thereby resulting in an increase in the volume of the parking mechanism and thus limiting the applicability of the parking mechanism.

### SUMMARY

With respect to the above problems, the present utility model discloses a parking device to overcome or at least partially solve the above problems.

To achieve the above object, the present utility model adopts the following technical solutions:
A parking device, comprising: a parking mechanism and a manual unlocking mechanism;
wherein the parking mechanism is connected to a shaft of a reducer so as to control the shaft of the reducer to be in a parking state or to unlock the parking state;
the parking mechanism is immersed in lubricating oil inside a housing of the reducer;
one end of the manual unlocking mechanism is located inside a cab, and the other end of the manual unlocking mechanism is connected to the parking mechanism so as to drive the parking mechanism to control the shaft of the reducer to switch to unlocking the parking state.

Optionally, the manual unlocking mechanism comprises a manual pull rod; one end of the manual pull rod extends into the cab, and the other end of the manual pull rod is connected to the parking mechanism so as to drive the parking mechanism to move.

Optionally, the manual unlocking mechanism further comprises a linkage; the manual pull rod moves back and forth in a straight line along its own axial direction, and is connected to the parking mechanism through the linkage.

Optionally, the parking mechanism is provided with an arc-shaped groove, one end of the linkage is located in the arc-shaped groove, and the other end of the linkage is movably connected to the manual pull rod; a central angle of the arc-shaped groove is not less than a rotation angle of the parking mechanism.

Optionally, the parking mechanism comprises a parking gear, a parking pawl, a pawl shaft, an eccentric cam, a parking guide shaft, a position-limiting plate, and a return spring; the parking gear is connected to the shaft of the reducer; the parking pawl is located below the parking gear, and a parking-in end of the parking pawl can form a clamp with the parking gear;
the pawl shaft and the parking guide shaft are respectively connected to the housing of the reducer, a connecting end of the parking pawl is sleeved on the pawl shaft, and the parking-in end of the parking pawl is located above the eccentric cam and in contact with an arc-shaped surface of the eccentric cam; the arc-shaped groove is provided on the eccentric cam, and the eccentric cam is freely sleeved on the parking guide shaft; the position-limiting plate is connected to the parking guide shaft, and two ends of the return spring are respectively connected to the position-limiting plate and the eccentric cam.

Optionally, the parking mechanism further comprises a roller and a connecting rod; the connecting rod is connected to the parking-in end of the parking pawl, and the roller is rotatably connected to the connecting rod, and the parking pawl is in contact with the arc-shaped surface of the eccentric cam through the roller.

Optionally, the parking mechanism further comprises a torsion spring; one end of the torsion spring is connected to the housing of the reducer, and the other end of the torsion spring is connected to the parking pawl so as to drive the parking pawl to disengage from the parking gear.

Optionally, a circular sealing groove is provided on the manual pull rod, a sealing ring is provided inside the sealing groove, and the sealing groove is located at a connection position between the manual pull rod and the housing of the reducer.

Optionally, a tooth groove length of the parking gear is greater than a length of the parking-in end of the parking pawl.

Optionally, the parking gear is connected to an input shaft of the reducer.

The advantages and beneficial effects of the present utility model are as follows.

In the parking device according to the present utility model, by providing the parking mechanism and the manual unlocking mechanism, it is possible to limit the rotation of the shaft of the reducer through the parking mechanism, specifically, make the rotation of the shaft of the reducer stop or resume, and thus achieve the parking and unlocking of commercial vehicles, and it is also possible to control the manual unlocking mechanism inside the cab to unlock the parking mechanism when the parking mechanism is in the parking state and cannot operate itself, thereby ensuring timely unlocking of the parking mechanism and thus improving the safety and convenience of the parking device.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present utility model. Moreover, throughout the drawings, the same reference numerals are used to denote the same components. In the drawings:
FIG. 1 is a schematic diagram of the structure of a parking device according to an embodiment of the present utility model from a first angle of view;
FIG. 2 is a schematic diagram of the structure of the parking device according to the embodiment of the present utility model from a second angle of view; and
FIG. 3 is a schematic diagram of the connecting position and structure of the parking device and a gearbox box according to the embodiment of the present utility model.

### DETAILED DESCRIPTION

In order to make the object, technical solutions, and advantages of the present utility model clearer, the present utility model will be described clearly and completely in conjunction with the specific embodiments and corresponding drawings. Obviously, the embodiments described are only part of rather than all of the embodiments of the present utility model. Based on the embodiments of the present utility model, all other embodiments obtained by those of ordinary skill in the art without paying creative work shall fall within the protection scope of the present utility model.

It should be understood that the terms "comprise/include", "consist of' or any other variants are intended to cover non-exclusive inclusion, so that the product, apparatus, process or method including a series of elements may not only include those elements, but may also include other elements not stated explicitly, or elements inherent to the product, apparatus, process or method. Without more limitations, an element defined by the phrase "comprise/include" or "consist of" does not exclude the case that there are other same elements in the product, apparatus, process or method including the element.

It should also be understood that, orientation or positional relationship indicated by the terms "upper", "lower", "front", "rear", "left", "right", "top", "bottom", "inside", "outside", etc. are orientation or positional relationship based on the drawings, which are merely for convenience of describing the present utility model and simplifying the description, rather than indicating or implying that the device, component or structure referred to must have a specific orientation, or must be constructed and operated with a specific orientation, and they should not be construed as limiting the present utility model.

The technical solutions provided by the embodiments of the present utility model will be described in detail below in conjunction with the accompanying drawings.

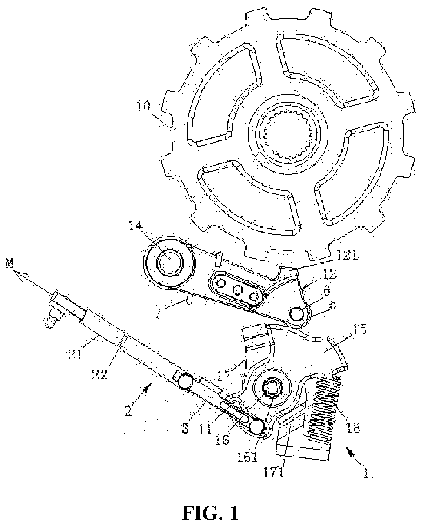

As shown in FIGS. 1 to 3, this embodiment discloses a parking device that can be used in commercial vehicles. The parking device comprises a parking mechanism 1 and a manual unlocking mechanism 2. The parking mechanism 1 is connected to a shaft of the reducer and is used to control the shaft of the reducer to be in the parking state or to unlock the parking state. The parking mechanism 1 is immersed in the lubricating oil of a housing 42 of the reducer.

One end of the manual unlocking mechanism 2 is located inside the cab, and the other end of the manual unlocking mechanism 2 is connected to the parking mechanism 1 to drive the parking mechanism to move. When the parking mechanism 1 is unable to operate in the parking state, the parking mechanism can be controlled to move to the unlocking state by driving the manual unlocking mechanism in the cab, thereby achieving the unlocking of the parking state.

In the parking device according to this embodiment, by providing a parking mechanism and a manual unlocking mechanism, it is possible to control the rotation of the shaft of the reducer through the parking mechanism, specifically, make the rotation of the shaft of the reducer stop or resume and thus achieve the parking and unlocking of commercial vehicles, and it is also possible to control the manual unlocking mechanism inside the cab to unlock the parking mechanism when the parking mechanism is in the parking state and cannot operate itself, thereby ensuring timely unlocking of the parking mechanism and thus improving the safety and convenience of the parking device.

As shown in FIGS. 1 to 3, in this embodiment, the parking mechanism 1 comprises a parking gear 10, a parking pawl 12, a pawl shaft 14, an eccentric cam 15, a parking guide shaft 16, a position-limiting plate 17, and a return spring 18. The parking gear 10 is connected to the shaft of the reducer through splines, and the parking pawl 12 is located below the parking gear 10. When the parking pawl parks into the parking gear, the parking state is achieved. When the parking pawl is disengaged from the parking gear, the parking state is unlocked.

The parking pawl is located below the parking gear, so that the meshing position of the parking pawl and the parking gear, the pawl shaft, the eccentric cam, and the parking guide shaft are located in the lubricating oil in the housing of the reducer, thereby reducing the impact during the transmission process and improving the durability of the parking mechanism.

Specifically, the pawl shaft 14 and the parking guide shaft 16 are respectively connected to the housing 42 of the reducer. In FIG. 1, the connecting end of the parking pawl 12 is sleeved on the pawl shaft 14, and the parking-in end 121 of the parking pawl 12 is located above the eccentric cam 15 and can contact the arc-shaped surface of the eccentric cam 15. An arc-shaped groove 11 is provided on the eccentric cam 15 for connecting with the manual unlocking mechanism 2.

Further, the eccentric cam 15 is freely sleeved on the parking guide shaft 16, and a position-limiting block 161 is provided on the parking guide shaft 16 to fix the axial position of the eccentric cam 15. The position-limiting plate 17 is connected to the parking guide shaft 16 and can rotate along with the parking guide shaft 16 relative to the eccentric cam 15. The return spring 18 is located between the position-limiting plate 17 and the eccentric cam 15, and two ends of the return spring 18 are respectively connected to the position-limiting plate 17 and the eccentric cam 15.

As shown in FIG. 1, when the parking mechanism is in the parking state, an actuator (not shown in the figure) is controlled to drive the parking guide shaft 16 to rotate counterclockwise, and further drive the position-limiting plate 17 to rotate counterclockwise. During this process, the position-limiting plate 17 drives the eccentric cam 15 to rotate counterclockwise by compressing the return spring 18, so that a convex section of the arc-shaped surface can drive the parking-in end 121 of the parking pawl to rotate counterclockwise around the pawl shaft 14, and thus the parking-in end 121 of the parking pawl can park into an tooth groove of the parking gear 10, thereby achieving clamping of the parking gear. At this moment, the shaft of the reducer stops rotating, and the commercial vehicle is in a parking state.

The flexible driving of the eccentric cam 15 can be achieved through the return spring 18. Specifically, during the parking process, when the parking pawl 12 contacts a tooth of the parking gear 10, the parking pawl 12 can drive the eccentric cam 15 to press the return spring 18, thereby achieving flexible contact between the eccentric cam and the parking gear to avoid damaging the integrity of the parking pawl or the parking gear due to hard collisions between the parking pawl and the parking gear, and thus achieving the effect of improving the durability of the parking pawl and the parking gear.

When the parking mechanism unlocks the parking state, the actuator can drive the parking guide shaft 16 to rotate clockwise, and further drive the position-limiting plate 17 to rotate clockwise, and further drive the eccentric cam 15 to rotate clockwise through the return spring 18, so that a concave section of the arc-shaped surface corresponds to the parking-in end 121 of the parking pawl. As a result, the unsupported parking pawl 121 will rotate clockwise and downwards around the pawl shaft 14, and be disengaged from the tooth groove of the parking gear 10, and thus the shaft of the reducer is not limited anymore and continues to rotate, thereby completing the unlocking of the parking state.

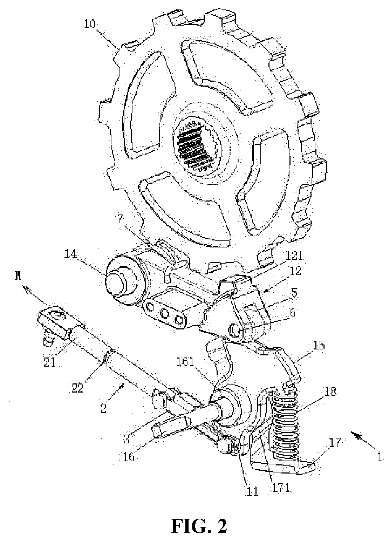

As shown in FIG. 2, in this embodiment, the parking mechanism 1 further comprises a roller 5 and a connecting rod 6. The connecting rod 6 is connected to the parking-in end 121 of the parking pawl, and the roller 5 is rotatably connected to the connecting rod 6. The parking pawl 12 is in rolling contact with the arc-shaped surface of the eccentric cam 15 through the roller 5, which can reduce the friction force between the parking pawl and the eccentric cam and reduce the wear of the parking pawl and the eccentric cam, thereby achieving the technical effect of improving the durability of the parking pawl and the eccentric cam.

As shown in FIGS. 1 and 2, preferably, in this embodiment, the parking mechanism 1 further includes a torsion spring 7. One end of torsion spring 7 is connected to the housing 42 of the reducer, and the other end of torsion spring 7 is connected to an end face of parking pawl 12.

When the parking pawl 12 rotates and parks into an tooth groove of the parking gear 10, the eccentric cam 15 needs to overcome the elasticity of the torsion spring 7 to drive the parking pawl 12 to park into the parking gear 10. At this moment, the torsion spring 7 is in a stretched state and has a tendency to drive the parking pawl 12 to move away from the tooth groove of the parking gear 10. Therefore, when the concave section of the arc-shaped surface of the eccentric cam 15 corresponds to the parking-in end 121 of the parking pawl, the torsion spring 7 in the stretched state can provide a driving force for the disengagement between the parking gear 10 and the parking pawl 12, so that the parking pawl 12 can immediately move in the direction of disengaging from the tooth groove of the parking gear 10, thereby ensuring timely unlocking of the parking state.

The return spring and the torsion spring may be in the form of torsional spring respectively, and of course, they may also be in the form of tension spring. They can provide a driving force for the movement of the eccentric cam and the parking pawl respectively.

As shown in FIG. 1 and FIG. 2, preferably, in a circumferential direction of the parking gear 10, the length of a tooth groove of the parking gear 10 is greater than the length of the parking-in end 121 of the parking pawl, which can make the parking pawl more easily park into the tooth groove, so that the parking mechanism can be applicable to the shaft of reducers with various speeds. On this basis, when the parking device is provided in commercial vehicle with a single-gear high-speed-ratio, the parking pawl can also park into an tooth groove of the parking gear in a timely manner, and the probability of collision between the parking pawl and the parking gear can also be reduced, and thus the durability of the parking mechanism can be improved.

The length of the tooth groove can be increased by reducing the teeth number of the parking gear or increasing the size of the parking gear without changing the teeth number of the parking gear.

On this basis, in this embodiment, the parking gear is connected to the input shaft of the reducer which may specifically be the motor shaft of the reducer. In this way, the torque that the pawl needs to overcome and the inertia of the parking gear can be reduced by taking advantage of the smaller torque of the input shaft of the reducer, thereby reducing the size of the parking mechanism and thus achieving the effect of saving internal space of the reducer.

In other embodiments, the length of the tooth groove of the parking gear and the size of the parking-in end of the parking pawl can be adjusted based on the connection of the parking gear and the shaft with a different speed, thereby ensuring that the parking pawl can park into the parking gear.

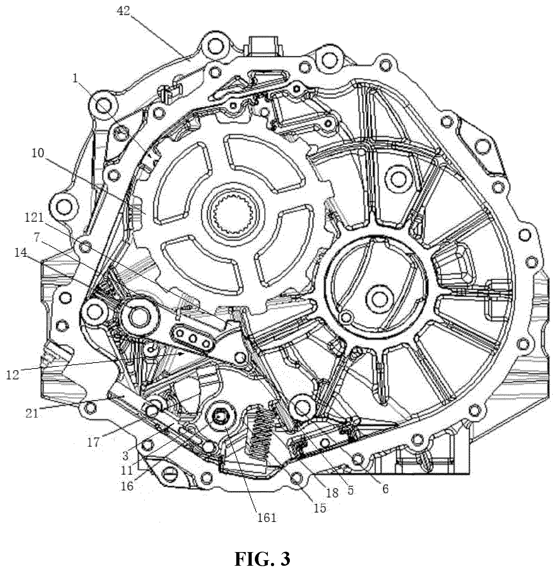

As shown in FIG. 3, preferably, the position-limiting plate 17 is provided with a bending section 171, which can limit the counterclockwise rotation angle of the eccentric cam 15, thereby avoiding excessive rotation that may cause the eccentric cam to collide with the house of the reducer and be damaged, and thus achieving the technical effect of improving the durability of the eccentric cam. Moreover, by limiting the counterclockwise rotation angle of the eccentric cam 15 using the bending section 171, when the eccentric cam 15 rotates counterclockwise to the maximum angle, the convex section of the arc-shaped surface of eccentric cam 15 contacts the parking-in end 121 of the parking pawl, thereby accurately pushing and maintaining the parking-in end of the parking pawl in an tooth groove of the parking gear, which can avoid excessive rotation of the eccentric cam that may cause the parking-in end of the parking pawl to disengage from the tooth groove of the parking gear, and thus achieving the technical effect of improving the parking control accuracy of the parking pawl.

In this embodiment, a flat groove surface is provided on the parking guide shaft 16, and a flat groove hole is provided on the position-limiting plate 17. The radial positioning of the position-limiting plate 17 can be achieved by the sleeve connection between the flat groove surface and the flat groove hole, thereby driving the position-limiting plate to rotate.

Further, the inner wall of the flat groove surface may be not parallel to the inner wall of the flat groove hole, and the position-limiting plate can also be clamped to achieve the radial positioning of the position-limiting plate. The inner wall of the flat groove surface can be adjusted adaptively according to different models of the actuators that control the rotation of the parking guide shaft.

As shown in FIGS. 1 to 3, in this embodiment, the manual unlocking mechanism 2 comprises a manual pull rod 21. One end of manual pull rod 21 extends into the cab, and the other end of manual pull rod 21 is connected to the parking mechanism 1. The manual pull rod has the merits of simple structure, easy availability, and low cost.

Preferably, a driving component is provided at one end of the manual pull rod 21, and the manual pull rod 21 extends into the cab through the driving component to facilitate adjusting the position of the manual unlocking mechanism inside the cab.

In this embodiment, the driving component may be a linkage mechanism, and the driving end of the linkage mechanism is located inside the cab. By manipulating the linkage mechanism to drive the manual pull rod 21 and thereby drive the eccentric cam 15 to rotate clockwise, and further drive the parking pawl 16 to disengage from the parking gear 10, the unlocking of the parking state is completed.

In other embodiments, depending on the design of the entire vehicle, the driving component may also be a control button and an electric push rod. For example, the control button is connected to the electric push rod, the electric push rod drives the manual pull rod to move and further drives the eccentric cam to rotate counterclockwise. In this way, the control button can be pressed in the cab to achieve the extension and retraction of the electric push rod and further achieve the movement of the manual pull rod, and the parking and unlocking of the parking state can also be achieved.

Further, the manual pull rod 21 extends to the outside of the housing 42 of the reducer to facilitate the connection between the driving component and the manual pull rod. Under the limitation of the housing 42 of the reducer, the manual pull rod can move along its own axial direction, i.e., the M direction in FIG. 1, thereby improving the simplicity of controlling the movement direction of the manual pull rod.

n this basis, the parking device also comprises a linkage 3. One end of the linkage 3 is hinged with the manual pull rod 21, and the other end of the linkage 3 is connected to the parking mechanism 1.

As shown in FIG. 2, in this embodiment, a ring-shaped sealing groove 22 is provided on the manual pull rod 21, and a sealing ring is provided inside the sealing groove 22. The manual pull rod 21 is sealedly connected to the housing 42 of the reducer through the sealing ring, thereby ensuring that the housing of the reducer can always be in a sealed state.

As shown in FIG. 1, one end of the linkage 3 is connected to a cylindrical pin, and the cylindrical pin is provided in the arc-shaped groove 11 of the eccentric cam 15. The other end of the linkage 3 is hinged with the manual pull rod 21 through a pin.

On this basis, as shown in FIG. 1, when the parking mechanism itself is able to park in and unlock, there is no need to operate the manual pull rod 21. Namely, the manual pull rod 21 remains the position relative to the housing 42 of the reducer unchanged. At this moment, during the reciprocating rotation of the eccentric cam 15 driven by the parking mechanism 1, the cylindrical pin at the end of the linkage 3 slides relative to the arc-shaped groove 11 due to the hinge between the manual pull rod 21 and the linkage 3, thereby ensuring that the driving mechanism can smoothly complete the parking and unlocking operations.

When parking mechanism 1 is in the parking state and cannot be unlocked by itself, the manual pull rod 21 is pulled in the M direction. Due to the hinge connection between the manual pull rod 21 and the linkage 3, the cylindrical pin at the end of linkage 3 is pulled to move along the arc-shaped groove 11. When the cylindrical pin at the end of linkage 3 moves to the left end of the arc-shaped groove 11, the manual pull rod 21 continues to be pulled, so that the eccentric cam 15 can be driven by the linkage 3 and the cylindrical pin at its end to rotate clockwise as shown in FIG. 1, and then by the torsion spring 7 driving the parking pawl 12, the parking-in end 121 of the parking pawl disengages from the tooth groove, and the unlocking operation of the parking state is completed.

Preferably, a central angle of the arc-shaped groove 11 is not less than a rotation angle of the eccentric cam 15. This ensures that the manual pull rod will not move along with the parking mechanism during the parking process of the parking mechanism, thereby improving the simplicity of movement trajectory of the manual pull rod, and thus enhancing the simplicity of controlling the manual pull rod.

Further, preferably, when the parking mechanism 1 is in the parking state, the left end of the arc-shaped groove 11 in FIG. 1 contacts the cylindrical pin. In this way, when the parking unlocking is performed by pulling the manual pull rod 21, the manual pull rod 21 immediately drives the eccentric cam 15 to rotate with the help of the linkage 3 and the cylindrical pin at its end, thereby improving the response speed of unlocking the parking state by pulling the manual pull rod and ensuring timely unlocking of the parking state.

The above is only implementation of the present utility model and is not intended to limit the scope of the present utility model. Any modifications, equivalent substitutions, improvements, extensions, etc. made within the spirit and principle of the present utility model should all fall into the protection scope of the present utility model.

## Claims

1. A parking device, comprising: a parking mechanism (1) and a manual unlocking mechanism (2);
**characterized in that**: the parking mechanism (1) is connected to a shaft of a reducer so as to control the shaft of the reducer to be in a parking state or to unlock the parking state;
the parking mechanism (1) is immersed in lubricating oil inside a housing (42) of the reducer;
one end of the manual unlocking mechanism (2) is located inside a cab, and the other end of the manual unlocking mechanism (2) is connected to the parking mechanism (1) so as to drive the parking mechanism (1) to control the shaft of the reducer to switch to unlocking the parking state.

2. The parking device according to claim 1, **characterized in that**: the manual unlocking mechanism (2) comprises a manual pull rod (21); one end of the manual pull rod (21) extends into the cab, and the other end of the manual pull rod (21) is connected to the parking mechanism (1) so as to drive the parking mechanism (1) to move.

3. The parking device according to claim 2, **characterized in that**: the manual unlocking mechanism (2) further comprises a linkage (3); the manual pull rod (21) moves back and forth in a straight line along its own axial direction, and is connected to the parking mechanism (1) through the linkage (3).

4. The parking device according to claim 3, **characterized in that**: the parking mechanism (1) is provided with an arc-shaped groove (11), one end of the linkage (3) is located in the arc-shaped groove (11), and the other end of the linkage (3) is movably connected to the manual pull rod (21); a central angle of the arc-shaped groove (11) is not less than a rotation angle of the parking mechanism (1).

5. The parking device according to claim 4, **characterized in that**: the parking mechanism (1) comprises a parking gear (10), a parking pawl (12), a pawl shaft (14), an eccentric cam (15), a parking guide shaft (16), a position-limiting plate (17), and a return spring (18); the parking gear is connected to the shaft of the reducer; the parking pawl (12) is located below the parking gear (10), and a parking-in end (121) of the parking pawl (12) can form a clamp with the parking gear (10);
the pawl shaft (14) and the parking guide shaft (16) are respectively connected to the housing (42) of the reducer, a connecting end of the parking pawl (12) is sleeved on the pawl shaft (14), and the parking-in end (121) of the parking pawl (12) is located above the eccentric cam (15) and in contact with an arc-shaped surface of the eccentric cam (15); an arc-shaped groove (11) is provided on the eccentric cam (15), and the eccentric cam (15) is freely sleeved on the parking guide shaft (16); the position-limiting plate (17) is connected to the parking guide shaft (16), and two ends of the return spring (18) are respectively connected to the position-limiting plate (17) and the eccentric cam (15).

6. The parking device according to claim 5, **characterized in that**: the parking mechanism (1) further comprises a roller (5) and a connecting rod (6); the connecting rod (6) is connected to the parking-in end (121) of the parking pawl (12), and the roller (5) is rotatably connected to the connecting rod (6), and the parking pawl (12) is in contact with the arc-shaped surface of the eccentric cam (15) through the roller (5).

7. The parking device according to claim 5 or 6, **characterized in that**: the parking mechanism (1) further comprises a torsion spring (7); one end of the torsion spring (7) is connected to the housing (42) of the reducer, and the other end of the torsion spring (7) is connected to the parking pawl (12) so as to drive the parking pawl (12) to disengage from the parking gear (10).

8. The parking device according to any one of claims 4-6, **characterized in that**: a circular sealing groove is provided on the manual pull rod (21), a sealing ring is provided inside the sealing groove, and the sealing groove is located at a connection position between the manual pull rod (21) and the housing (42) of the reducer.

9. The parking device according to claim 5 or 6, **characterized in that**: a tooth groove length of the parking gear (10) is greater than a length of the parking-in end (121) of the parking pawl (12).

10. The parking device according to claim 5 or 6, **characterized in that**: the parking gear (10) is connected to an input shaft of the reducer.
